# EUROPEAN PATENT SPECIFICATION

(11) **EP 1 266 799 B1**
(45) Date of publication and mention of the grant of the patent: **22.12.2004**
(21) Application number: 02011732.1
(22) Date of filing: 27.05.2002
(51) Int. Cl.: B60R 11/02

(54) **Seat for vehicle with a box for subwoofer loudspeakers**
Fahrzeugsitz mit einer Box für Subwooferlautsprecher
Siège de véhicule avec boîte de haut-parleurs basse fréquence

(30) Priority: 15.06.2001 IT RE20010069
(43) Date of publication of application: 18.12.2002
(73) Proprietor: Ask Industries S.p.A., 42100 Reggio Emilia (IT)
(72) Inventor: Nili, Tiziano, 42100 Reggio Emilia (IT)
(74) Representative: Lecce, Giovanni

(56) References cited:
- EP-A- 0 411 786
- WO-A-94/10880
- US-A- 6 007 338

## Description

The present invention relates to a seat for vehicles with a box for subwoofer loudspeakers.

More particularly, the present invention relates to a seat for vehicle provided with a box for subwoofer loudspeakers that does not affect adversely the functionality and ergonomic solution of the seat.

As is known, the installation of boxes for subwoofer loudspeakers is at present realized by exploiting in a way as functional as possible the spaces that are usually non utilized, available in the bodies; in particular, in the more conventional three-volume vehicles, boxes are installed, for instance, in the spaces comprised in the gaps of the baggage racks, while in the models of one- or two volume vehicles they may find place, for instance, in the free spaces comprised between the back seats.

The installation of a box for subwoofer loudspeaker in the free space delimited between the seat and the lower flatbed of the vehicle is known from EP-A-0 411 786 and US-A-6 007 338. WO 94/10880 discloses a chair of double-walled construction provided with a loudspeaker at one opening in one of the walls; when the loudspeaker is activated, the pulsating diaphragm compresses air molecules in the air chamber created within the double walls.

In the present conditions, the boxes for subwoofer loudspeakers are not therefore proportioned according to the strictest technical requirements of acoustic yield, but according to compromises between such functional requirements and the volumes of the free spaces available for the installation. For such reasons, the present boxes have very different forms and size, depending on the models of the vehicles for which they are intended and the related available spaces.

It is therefore evident that the producers must operate in conditions that are far from being optimal from the point of view of the acoustic yield of the set, because of the different conformations of the boxes, and in non economical conditions from the point of view of the design, are they have to pay a particular attention in the study and the construction of the bodies, to constitute the necessary application spaces, and also because they are directly involved in the installation step of said boxes.

Object of this invention is to eliminate the above drawback.

A seat for vehicle having the features of the preamble of claim 1 is known from EP-A-0 411 786. The seat for vehicle subject-matter of the present invention is characterised by the features according to the characterising part of claim 1.

Said box may be sized depending on the individual vehicle models, or it may be a standard box and take into account the specific characteristics of sound emissions required, and the possible and efficient applicability to any type of seat for any vehicle model, involving usually in the preparation only the makers of said seat, and not those who prepare an assemble the body. The box, so designed and applied below one of the seats in general, extends towards the bottom, occupying only partly the free space available that has not been utilized for other requirements.

The conformation of the seat frame is such as to ensure a perfect application and adaptability of the upper part of the box in said free space, without affecting adversely the functionality and the ergonomic solution of the seat. The volumetric solution of the box, suitable for the requirements of a good sound emission, extends towards the bottom flatbed of the vehicles, without constituting a hindrance for the passengers' feet.

The advantages achieved by the preset invention lie essentially in that, thanks to the configuration of the seat with the specific dedicated free space, the box can be proportioned only according to its functional requirement of maximum acoustic yield, independently on its application, is reassembled independently and positioned in the special space in an easy, rapid and economical, manner by the same seat makers.

All this allows a remarkable saving both in. the design and the construction of the frames and the creation of spaces suitable for the location of the box, and also as concerns working times of vehicle assembly cycles, as the box is already applied to one of the seats of each vehicle. A further advantage lies in that the central position of emission of low frequencies of the box for subwoofer loudspeakers allow to obtain a uniformity of the sound in the whole interior compartment of vehicles.

The constructive and functional characteristics of the seat for vehicles of the present invention will be better understood thanks to the detailed description that follows, wherein reference is made to the attached drawings that represent a preferred embodiment offered by way of non limiting example and wherein:
Figure 1 shows a schematic view of the longitudinal section of a non limiting example of arrangement of the front and back seats of a vehicle, with the application of a box for subwoofer loudspeaker engaged with the frame of one of the seats, and
Figure 2 shows the schematic plan view of the same arrangement of the seats, with the box for subwoofer loudspeakers applied below the front seat, for instance that of the passenger.

With reference to the figures, the load-bearing structure or frame 1 of at least one of seats 2 of vehicle in general, is so configured as to form, in its lower part below seat 3, an empty space 4 wherein the upper part of a box for subwoofer loudspeakers 5 is housed and tied. The volume of said box extends towards the lower flatbed 6 of the vehicle, partly engaged in space 7, not utilized for other purposes. The connection with frame 1 takes place through the coupling of screws of peripheral brackets 8, pre-assembled along the upper periphery of box 5. The overall structure of box 5 is almost parallelepidal, with the upper part that may possibly take on a shaped form, so as to follow, at a suitable distance, the profile of seat 3, that maintains all its ergonomic characteristics unaltered. The extension towards flatbed 6, which depends on the volume required for the best obtainment of optimum characteristics of sound emission, does not limit in any way the residual space available for the feet of the passengers who occupy the back seats 2'.

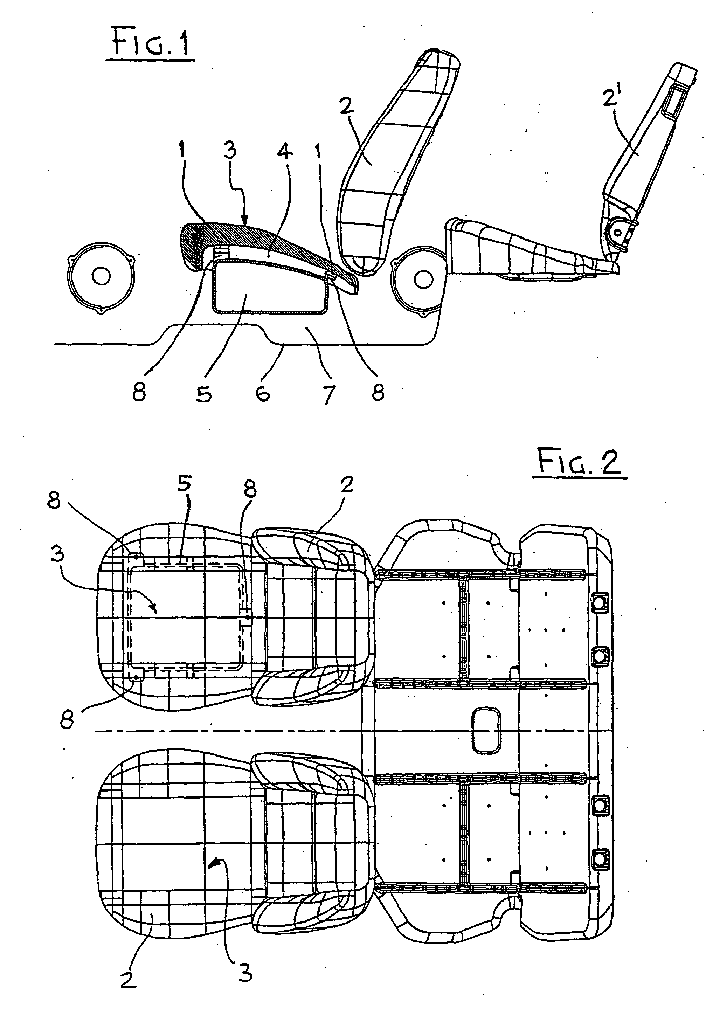

In Figure 2, the box for subwoofer loudspeakers 5 is applied, by way of non limiting example, below the seat of the passenger.

In any case, it might be applied, with the same functions and the same results, below the driver's seat, or, for vehicles other than the usual sedans, such as for instance sedan limousines with central seats and/or folding seat, coaches, vehicles having three rows of seta, wherein the back seat have the same configuration as the front one and the like, the box may be located under any seat.

Space 4 created in the load-bearing structure or frame 1 of the seats and the volume configuration of box 5 can therefore be realized in a different manner for seats 2 of each model of vehicles, or be realized according to a standardization that can be adopted for all seats 2 of all the vehicle models and for the optimum acoustic yield of typical systems.

In any case, the adoption of seats 2 provided with frame 1 arranged for the application of boxes for subwoofer loudspeaker 5 according to the present invention, allows the realization of low frequency, economical, high performance acoustic systems, facilitates and causes the design of bodies to be economical, reduces the first assembly time and maintenance intervention of said system, and reduces the costs of the components.

In particular, also the electric connection means between the box and the car-radio system, usually located in the dashboard are simplified; for this system, in fact, shore electric cables suffice, that go from the flatbed to a mobile connection below the seat, that engages in the corresponding fixed connection located on the box. The high performance of the mobile connection ensure the stable contact of the conductor, independently on the possible longitudinal and/or vertical adjustment of the seats.

## Claims

1. A seat for vehicle comprising a load bearing structure (1), a seat (3), a free space (7) below the seat (3), delimited between said seat (3) and the lower flatbed (6) of the vehicle, and a box (5) for subwoofer loudspeaker, wherein said box (5) for subwoofer loudspeaker is located in said free space (7) and the upper part of the box (5) for subwoofer loudspeaker is located in and tied to the load bearing structure (1) below the seat (3), the box extends towards the lower flatbed (6) of the vehicle and occupies only partly the free space (7) delimited between said seat (3) and said lower flatbed (6) **characterized by** the box leaving a residual free space under the box for the feet of a passenger.

2. The seat for vehicle according to claim 1, **characterised in that** the load-bearing structure (1) has, at its lower part, an empty space (4) and the upper part of the box (5) for subwoofer loudspeaker is applied and fixed to said empty space (4).

3. The seat for vehicle according to claim 2, **characterised in that** the upper part of the box (5) for subwoofer loudspeaker is provided with brackets (8) along its periphery, and it is applied and fixed to said load-bearing structure (1) by said brackets (8).

4. The seat for vehicle according to anyone of the preceding claims, **characterised in that** the upper part of the box (5) for subwoofer loudspeaker has a shape that follows the profile of the seat (3).

5. The seat for vehicle according to anyone of the preceding claims, **characterised in that** the extension of the box (5) towards the lower flatbed (6) of the vehicle depends on the volume required for obtaining the optimum sound emission characteristics of the subwoofer loudspeaker.

6. The seat for vehicle according to anyone of the preceding claims, **characterised in that** the seat (3) is preassembled with the box (5).

7. The seat for vehicle according to anyone of the preceding claims, **characterised in that** the subwoofer loudspeaker contained in the box (5) is connected to a car-radio system of vehicles through mobile connections.

## Patentansprüche

1. Sitz für ein Fahrzeug, welches einen Lasten tragenden Aufbau (1), einen Sitz (3), einen freien Raum (7) unterhalb des Sitzes (3), welcher zwischen dem Sitz (3) und dem unteren Flachbett (6) des Fahrzeugs begrenzt ist, und eine Box (5) für Subwoofer-Lautsprecher umfasst, wobei die Box (5) für Subwoofer-Lautsprecher in dem freien Raum (7) angeordnet ist und der obere Teil der Box (5) für Subwoofer-Lautsprecher in dem Lasten tragenden Aufbau (1) unterhalb des Sitzes (3) angeordnet und befestigt ist, die Box sich zu dem unteren Flachbett (6) des Fahrzeugs erstreckt und nur einen Teil des freien Raumes (7), welcher zwischen dem Sitz (3) und dem unteren Flachbett (6) begrenzt ist, belegt, **dadurch gekennzeichnet, dass** die Box einen restlichen freien Raum unter der Box für die Füße der Passagiere freilässt.

2. Sitz für ein Fahrzeug gemäß Anspruch 1, **dadurch gekennzeichnet, dass** der Lasten tragende Aufbau (1) an seinem unteren Teil einen leeren Raum (4) aufweist, und der obere Teil der Box (5) für Subwoofer-Lautsprecher an dem leeren Raum (4) angebracht und befestigt ist.

3. Sitz für ein Fahrzeug gemäß Anspruch 2, **dadurch gekennzeichnet, dass** der obere Teil der Box (5) für Subwoofer-Lautsprecher mit Klammern (8) entlang seinem Umfang versehen ist und an den Lasten tragenden Aufbau (1) durch die Klammern (8) angebracht und befestigt ist.

4. Sitz für ein Fahrzeug gemäß einem der vorhergehenden Ansprüche, **dadurch gekennzeichnet, dass** der obere Teil der Box (5) für Subwoofer-Lautsprecher eine Form aufweist, welche dem Profil des Sitzes (3) folgt.

5. Sitz für ein Fahrzeug gemäß einem der vorhergehenden Ansprüche, **dadurch gekennzeichnet, dass** die Erstreckung der Box (5) zu dem unteren Flachbett (6) des Fahrzeugs von dem Volumen abhängt, welches für das Erhaltender optimalen Klangemissions-Eigenschaften des Subwoofer-Lautsprechers abhängt.

6. Sitz für ein Fahrzeug gemäß einem der vorhergehenden Ansprüche, **dadurch gekennzeichnet, dass** der Sitz (3) mit der Box (5) vormontiert ist.

7. Sitz für ein Fahrzeug gemäß einem der vorhergehenden Ansprüche, **dadurch gekennzeichnet, dass** der in der Box (5) enthaltene Subwoofer-Lautsprecher an ein Autoradiosystem von Fahrzeugen über mobile Verbindungen verbunden ist.

## Revendications

1. Siège pour véhicule comprenant une structure (1) porteuse de charge, un siège (3), un espace libre (7) sous le siège (3), délimité entre ledit siège (3) et le plancher (6) du véhicule, et un coffret (5) pour haut-parleur basse fréquence, ledit coffret (5) pour haut-parleur basse fréquence étant situé dans ledit espace libre (7) et la partie supérieure du coffret (5) pour haut-parleur basse fréquence étant située dans et attachée à la structure (1) porteuse de charge sous le siège (3), le coffret s'étendant vers le plancher (6) du véhicule et n'occupant que partiellement l'espace libre (7) délimité entre ledit siège (3) et ledit plancher (6), **caractérisé en ce que** le coffret laisse un espace libre résiduel sous le coffret pour les pieds d'un passager.

2. Siège pour véhicule selon la revendication 1, **caractérisé en ce que** la structure (1) porteuse de charge comporte, dans sa partie inférieure, un espace vide (4) et la partie supérieure du coffret (5) pour haut-parleur basse fréquence est installée et fixée dans ledit espace vide (4).

3. Siège pour véhicule selon la revendication 2, **caractérisé en ce que** la partie supérieure du coffret (5) pour haut-parleur basse fréquence est pourvue de ferrures de support (8) sur son pourtour et est installée et fixée sur ladite structure (1) porteuse de charge par lesdites ferrures de support (8).

4. Siège pour véhicule selon l'une quelconque des revendications précédentes, **caractérisé en ce que** la partie supérieure du coffret (5) pour haut-parleur basse fréquence a une forme qui épouse le profil du siège (3).

5. Siège pour véhicule selon l'une quelconque des revendications précédentes, **caractérisé en ce que** l'extension du coffret (5) vers le plancher (6) du véhicule dépend du volume nécessaire pour obtenir les caractéristiques optimales d'émission sonore du haut-parleur basse fréquence.

6. Siège pour véhicule selon l'une quelconque des revendications précédentes, **caractérisé en ce que** le siège (3) est préassemblé avec le coffret (5).

7. Siège pour véhicule selon l'une quelconque des revendications précédentes, **caractérisé en ce que** le haut-parleur basse fréquence contenu dans le coffret (5) est connecté à un système d'autoradio de véhicules par l'intermédiaire de connexions mobiles.
